# EUROPEAN PATENT APPLICATION

(11) **EP 1 482 276 A2**
(43) Date of publication of application: **01.12.2004**
(21) Application number: 04012702.9
(22) Date of filing: 28.05.2004
(51) Int. Cl.: G01C 19/56

(54) **Vibrator unit**

(30) Priority: 28.05.2003 JP 2003151295
(71) Applicant: SEIKO EPSON CORPORATION, Tokyo 160-0811 (JP)
(72) Inventor: Kinoshita, Yusuke, Suwa-shi Nagano-ken 392-8502 (JP)
(74) Representative: Hoffmann, Eckart, Dipl.-Ing.

(57) **Abstract**

Disclosed is a vibrator unit comprising a support section (14) for supporting a vibrator (10) on a substrate (17), the vibrator comprising a drive section (11A,11B) and a detection section (12). The drive section (11A,11B) comprises first and a second parallel rod-shaped drive arms vibrating in a first direction perpendicular to the applied rotation; the detection section (12) comprises a rod-shaped detection arm disposed between and parallel to the first and the second drive arms and detecting the Coriolis force acting in a third direction. The vibrator further comprises a rod-shaped arm supporting section (13) parallel to the first direction, wherein the ends of the arm supporting section are connected to the centers of the first and second drive arms (11A,1B) and the center of the arm supporting section is connected to the center of the detection arm (12). A vibrator supporting mechanism (15A,15B) comprises a first elastic mechanism for supporting the supporting section along the third direction.

## Description

The present invention relates to a vibrator unit and, more particularly, to a supporting mechanism for supporting a vibrator such as a gyro vibrator for detecting the orientation, speed, and posture of an object, and to including the vibrator and the supporting mechanism.

The gyro vibrator described above has a support section for supporting a drive section and a detection section. A Coriolis force is applied to the drive section in accordance with a rotation applied thereto while the drive section is vibrating along a certain direction. The detection section vibrates in accordance with the Coriolis force to detect the Coriolis force. The gyro vibrator is mounted on a substrate with the supporting section being supported by a supporting mechanism provided on the substrate.

However, because the supporting mechanism described above rigidly supports the gyro vibrator, it is problematical that the vibration of the drive section or the detection section of the gyro vibrator is limited or inhibited. In addition, if the rigidity of the supporting mechanism is lowered to avoid vibration being inhibited, there is caused a problem of lowering reliability such as a shock proof property.

It is an object of the present invention to provide a vibrator unit having a supporting mechanism that is capable of supporting the vibrator in a manner that vibration is not hindered on the one hand and the reliability not decreased on the other hand.

This object is achieved by a vibrator unit as claimed in claim 1. Preferred embodiments are subject-matter of the dependent claims.

Preferred embodiments of the present invention are hereinafter described in detail with reference to the accompanying drawings, in which:
- FIG. 1(A): is a plan view of a vibrator unit equipped with a gyro vibrator according to a first embodiment;
- FIG. 1(B): is a cross-sectional view of the vibrator unit of Fig. 1 (A);
- FIGS. 2(A): through 2(C) are schematic views showing the deformation of a drive arm;
- FIG. 3: is a schematic view showing the relationship between the deformation of the drive arm and the Coriolis force;
- FIGS. 4(A): through 4(C) are schematic views showing a deformation of a detection arm;
- FIGS. 5(A) and 5(B): are plan views of vibrator units according to a second embodiment;
- FIGS. 6(A)through 6(D): are schematic views showing structures of lead wires for supporting a gyro vibrator according to a third embodiment;
- FIG. 7: is a cross-sectional view showing a structure of a vibrator unit according to a fourth embodiment; and
- FIG. 8: is a plan view showing a structure of another vibrator unit according to the fourth embodiment.

### First embodiment

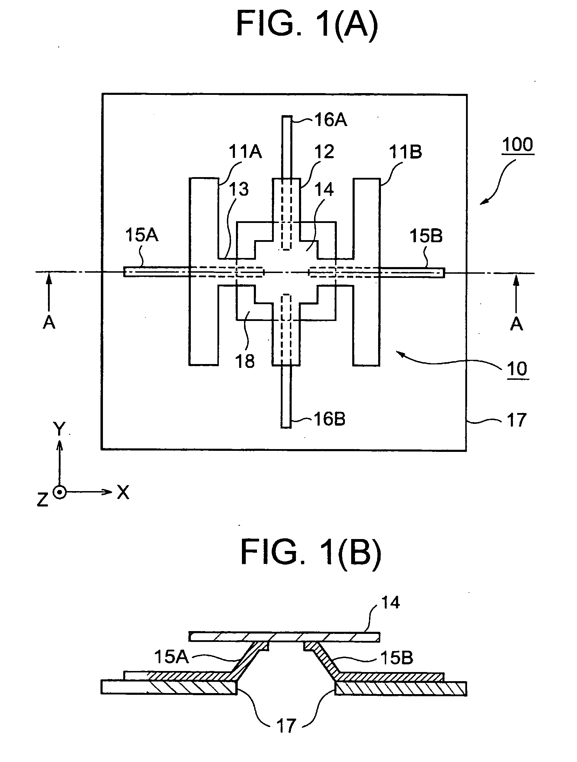

FIG. 1(A) shows a vibrator unit according to a first embodiment equipped with a gyro vibrator and
FIG. 1(B) shows a cross-sectional view along line A-A in FIG. 1(A).

The vibrator unit 100 according to the first embodiment is mounted on an object such as an electronic device or a vehicle to detect the orientation, speed, and posture of the object. The vibrator unit 100 comprises a gyro vibrator 10, lead wires 15A, 15B, 16A, and 16B forming a supporting mechanism for supporting the gyro vibrator 10, and a supporting substrate 17 for mounting the gyro vibrator 10 via the lead wires 15A and others.

The gyro vibrator 10 includes, as shown in FIG. 1(A), a first drive arm 11A and a second drive arm 11 B forming together a drive section, a detection arm 12 as a detection section, an arm supporting section 13, and a supporting board 14 as a supporting section so as to act in three modes known as drive mode, detection mode, and spurious mode.

X, Y and Z in the following text refer to axes of a Cartesian coordinate system as defined in the Figures. The first and the second drive arms 11A, 11 B are, as shown in FIG. 1(A), board like members parallel to each other and each elongated in the Y direction to a predetermined length. If rotation around the Z axis, that is one of changes in the orientation of the object mentioned above, is applied while the first and the second drive arms 11 A, 11 B are vibrating along the X direction, the first and the second drive arms 11A, 11B are effected by the Coriolis force corresponding to the amount of the rotation.

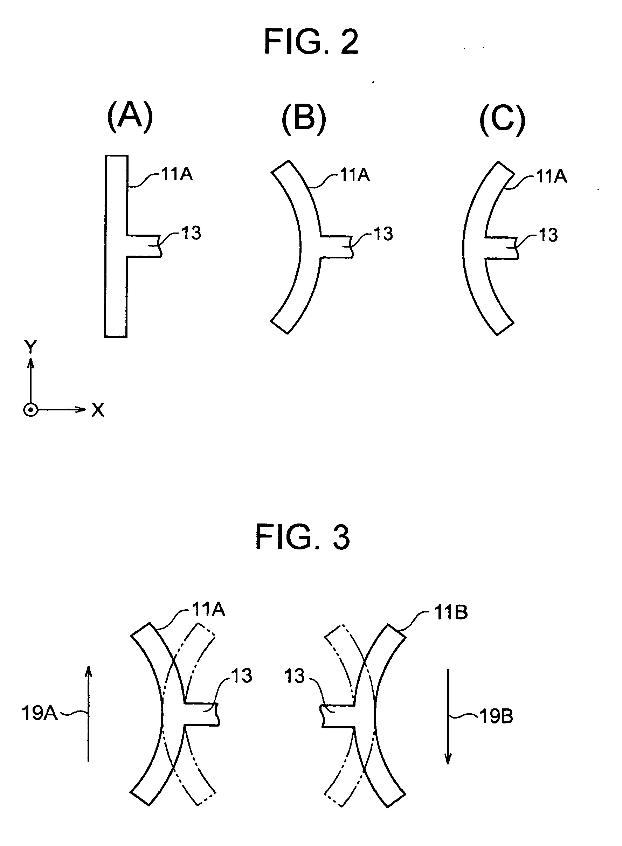

FIG. 2 shows a resulting deformation of the drive arms. As shown in FIGS. 2(A) through 2(C), the drive arm 11A vibrates so as to bend around its center in the longitudinal direction thereof. More specifically, the drive arm 11A is alternately deformed to a convex shape and a concave shape while vibrating, namely, the opposite longitudinal ends of the drive arm are displaced along the X axis relative to the longitudinal center of the drive arm 11A. The drive arm 11B vibrates correspondingly such that its shape becomes axisymmetrical to that of the drive arm 11A.

FIG. 3 shows the relationship between the deformation of the drive arm and the Coriolis force. As shown in FIG. 3, while the first drive arm 11A deforms from the shape illustrated by a broken line to the shape illustrated by a solid line and the second drive arm 11 B also deforms from the shape illustrated by a broken line to the shape illustrated by a solid line, they are subjected to the Coriolis force along the arrows 19A and 19B, respectively, in response to a clockwise rotation in the plane of the drawing. In contrast, while the first drive arm 11A deforms from the shape illustrated by a solid line to the shape illustrated by a broken line and the second drive arm 11 B also deforms from the shape illustrated by a solid line to the shape illustrated by a broken line, the Coriolis force acts in directions opposite to the arrows 19A and 19B in response to the same clockwise rotation.

The detection arm 12 is, similar to the first drive arm 11 A and the second drive arm 11B, a board member having the predetermined length and extending in the Y direction as shown in the drawing. Namely, the first drive arm 11 A, the second drive arm 11 B, and the detection arm 12 are parallel to each other. In response to the Coriolis force acting on the first and the second drive arm 11A, 11B, the detection arm 12 vibrates with an amplitude corresponding to the strength of the Coriolis force.

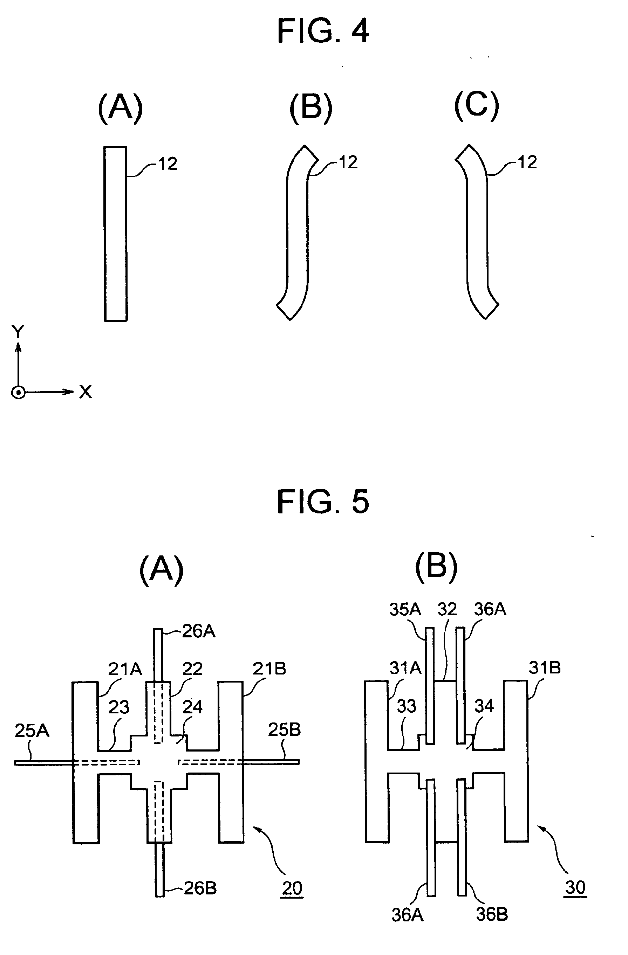

FIG. 4 shows a deformation of the detection arm. As shown in FIGS. 4(A) through 4(C), the detection arm 12 performs a bending action by which it is deformed to a shape like the letter "S" and the reverse of the letter "S" as is the case with the bending actions of the first and the second drive arms 11A, 11B shown in FIGS. 3(A) through 3(C). The Coriolis force is sensed by detecting an electric signal generated by the rotational bending action of the detection arm 12, thus obtaining a measure of the speed of the rotation applied to the object.

Returning to FIG. 1(A), one end of the arm supporting section 13 is connected to the center of the first drive arm 11A and the other end thereof is connected to the center of the second drive arm 11 B while the detection arm 12 is connected thereto with its center corresponding to the center of the arm supporting section 13. The supporting board 14 is a board like member having a predetermined area including the connecting point of the arm supporting section 13 and the detection arm 12.

The lead wires 15A, 15B extending in the X direction and the lead wires 16A and 16B extending in the Y direction are strip like members all having the same shape. Further, one end of each of the lead wires 15A, 15B is, as shown in FIG. 1 (B), connected to the lower side of the supporting board 14 and the other end is connected to the supporting substrate 17, and the lead wires are formed so as to prevent the vibrator 10 and the supporting substrate 17 from abutting on each other. As is the case with the lead wires 15A, 15B, one end of each of the lead wires 16A, 16B is connected to the supporting board 14 and the other end is connected to the supporting substrate 17, and the lead wires are formed so as to prevent the vibrator 10 and the supporting substrate 17 from abutting on each other. The supporting substrate 17 is, for example, a substrate made of an insulating material such as polyimide resin and has an opening for use of forming the lead wires 15A and so on in its center.

The lead wires 15A and 15B provided along the X direction are made of a material which makes the characteristic resonance frequency thereof lower than that of the lead wires 16A and 16B provided along the Y direction. Namely, the stiffness of the lead wires 15A and 15B in supporting the gyro vibrator 10 in the X direction is lower than the stiffness of the lead wires 16A and 16B in supporting the gyro vibrator 10 in the Y direction.

As described above, according to the vibrator unit of the first embodiment, since the supporting mechanism has a characteristic resonance frequency in the X direction lower than that in the Y direction, the vibration of the detection arm 12 along the X direction necessary for detecting the Coriolis force applied to the drive arms 11A, 11B can be prevented from being hindered, thus enabling detection of the speed of rotation applied to the object from outside with greater accuracy than is possible in the prior art.

### Second embodiment

FIGS. 5(A) and 5(B) show a vibrator unit according to a second embodiment. As shown in FIG. 5(A), a gyro vibrator 20 according to the second embodiment comprises a first drive arm 21A, a second drive arm 21 B, a detection arm 22, an arm supporting section 23, and a supporting board 24 respectively having substantially the same function as the first drive arm 11A, the second drive arm 11 B, the detection arm 12, the arm supporting section 13, and the supporting board 14 forming the gyro vibrator 10 shown in FIG. 1 (A). The gyro vibrator 20 is supported by lead wires 25A and 25B in the X direction and by lead wires 26A and 26B in the Y direction as is the case with the gyro vibrator 10 in which the supporting board 14 is supported by the lead wires 15A, 15B, 16A, and 16B.

The width of the lead wires 25A and 25B forming a second elastic mechanism is narrower then that of the lead wires 26A and 26B forming a first elastic mechanism. Thus, since with this supporting mechanism the characteristic resonance frequency of the vibration in the X direction is lower than that in the Y direction, the detection arm 22 is not prevented from vibrating along the X direction to detect the Coriolis force acting on the drive arms 21A and 21 B.

Another gyro vibrator 30 according to the second embodiment, as shown in FIG. 5(B), comprises a first drive arm 31 A, a second drive arm 31 B, a detection arm 32, an arm supporting section 33, and a supporting board 34 respectively having substantially the same function as the first drive arm 11A, the second drive arm 11 B, the detection arm 12, the arm supporting section 13, and the supporting board 14 forming the gyro vibrator 10 shown in FIG. 1(A). The gyro vibrator 30 is supported only by lead wires 35A, 35B, 36A, and 36B in the Y direction as is the case with the gyro vibrator 10 in which the supporting board 14 is supported in the Y direction by the lead wires 16A, and 16B, and is not supported in the X direction.

The lead wires 35A and 35B, parallel to each other, and the lead wires 35A and 35B, also parallel to each other, forming a first elastic mechanism, support the gyro vibrator 30 only in the Y direction.

Therefore, the detection arm 32 is not at all prevented from vibrating in the X direction to detect the Coriolis force acting on the drive arms 31A and 31B.

As described above, according to the vibrator unit of the second embodiment, since the gyro vibrator 20 is supported by the lead wires 26A and 26B in the Y direction and is supported in the X direction by the lead wires 25A and 25B having a characteristic resonance frequency lower than that of the lead wires 26A and 26B, the vibration of the detection arm 22 along the X direction is not hindered as is the case with the detection arm 12 of the vibrator unit 10 according to the first embodiment, thus enabling detection of the speed of rotation applied from outside with greater accuracy than the convention.

Furthermore, according to the other vibrator unit of the second embodiment, since the gyro vibrator 30 is supported only in the Y direction by the lead wires 35A, 35B, 36A, and 36B and is not supported in the X direction, namely there is no limitation in moving in the X direction, the vibration of the detection arm 32 along the X direction is not hindered, thus, as a result, enabling detection of the amplitude of rotation applied from outside with greater accuracy compared to the convention.

### Third embodiment

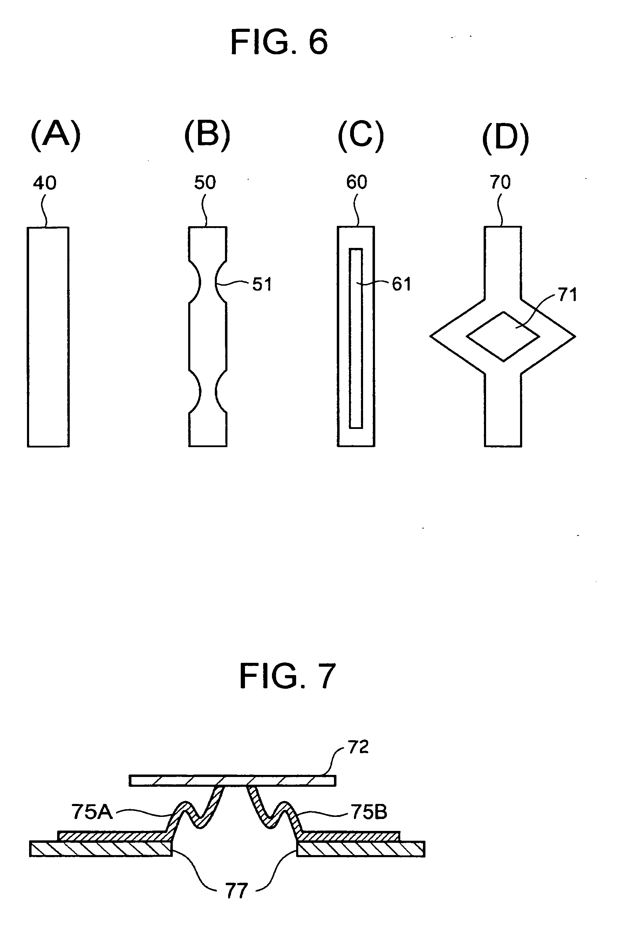

FIGS. 6(A) trough 6(D) show structures of lead wires for supporting a gyro vibrator according to a third embodiment. As shown in FIG. 6(A), a lead wire 40 having substantially the same function as the lead wire 15A in the first embodiment has a thickness (the dimension perpendicular to the plane of the drawing sheet) smaller than that of the lead wire 15A.

As shown in FIG. 6(B), a lead wire 50 having substantially the same function as the lead wire 15A in the first embodiment has at least one section along its longitudinal direction that is narrower than the remaining part. In other words, the width of the lead wire 50 is uneven since the narrower section has a width different from that of the rest. As an example of the narrower section, a concave shape as shown in the drawing or a wedge shape can be cited.

As shown in FIG. 6(C), a lead wire 60 having substantially the same function as the lead wire 15A in the first embodiment has a hollow section 61 along the longitudinal direction.

As shown in FIG. 6(D), a lead wire 70 having substantially the same function as the lead wire 15A in the first embodiment has a rhombic opening 71 at the center thereof instead of the hollow section 61 along the longitudinal direction.

As described above, according to the vibrator unit having the lead wires of the third embodiment, since the gyro vibrator is supported by the lead wires 40, 50, 60, or 70 having structures easy to be bent, the vibration for detecting of the detection arm is not hindered, thus enabling detection of the amplitude of rotation applied from outside with greater accuracy compared to the convention.

### Fourth embodiment

FIG. 7 is a cross-sectional view showing a structure of a vibrator unit according to a fourth embodiment. As shown in FIG. 7, the vibrator unit of the fourth embodiment comprises a gyro vibrator 72, lead wires 75A and 75B, and a supporting substrate 77 respectively having substantially the same functions as the gyro vibrator 10, the lead wires 15A and 15B, and the supporting substrate 17 shown in FIG. 1 (B) of the first embodiment.

The lead wires 75A and 75B are bent to a shape substantially like that of the letter "Z", and lead wires (not shown) corresponding to the lead wires 16A and 16B of the first embodiment are bent likewise. The bending shape can be obtained by, for example, pushing down the gyro vibrator 70 towards the supporting substrate 77 after mounting the gyro vibrator 70 on the lead wires 75A and 75B fixed to the supporting substrate 77.

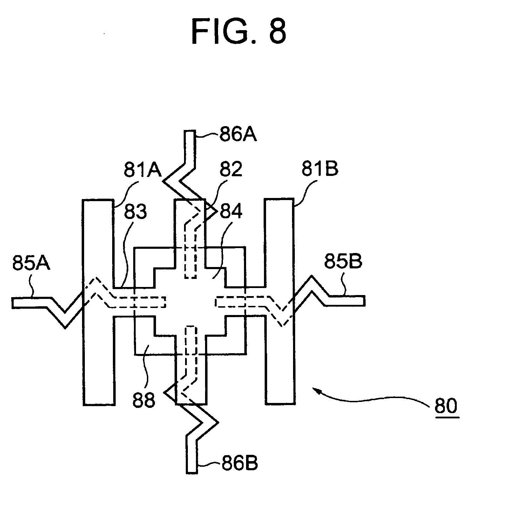

FIG. 8 is a plan view showing a structure of another vibrator unit according to the fourth embodiment. As shown in FIG. 8, gyro vibrator 80 of the fourth embodiment comprises a first drive arm 81 A, a second drive arm 81 B, a detection arm 82, an arm supporting section 83, and a supporting board 84 respectively having substantially the same functions as the first drive arm 11A, the second drive arm 11 B, the detection arm 12, the arm supporting section 13, and the supporting board 14 forming the gyro vibrator 10 shown in FIG. 1(A).

The gyro vibrator 80 is supported by lead wires 85A and 85B in the X direction and lead wires 86A and 86B in the Y direction as is the case with the gyro vibrator 10 in which the supporting board 14 is supported by the lead wires 15A, 15B, 16A, and 16B. The lead wires 85A, 85B, 86A, and 86B are bent to a shape substantially like that of the letter "Z." That is, in contrast to the lead wires 75A and 75B bent vertically, the lead wires 85A, 85B, 86A, and 86B are bent horizontally.

As described above, according the fourth embodiment, since the lead wires 75A, 85A and others are bent, the characteristic resonance frequencies of those lead wires are lower than those of conventional lead wires without bent shapes. Thus, since the vibration of the detection arm along the X direction necessary for detecting the Coriolis force acting on the drive arms can be prevented from being hindered, the speed of rotation applied from outside can be detected with greater accuracy compared to the prior art.

Furthermore, by using the lead wires having the Z-shapes in the horizontal direction instead of the lead wires 75A and 75B having the Z-shapes in height-wise, namely in the vertical direction, substantially the same advantages as described above can be obtained.

In the supporting mechanisms according to the present invention, the characteristic resonance frequency of vibration along at least one of the first and the second directions is lower than the characteristic resonance frequency of vibration along a direction other than the at least one of the first and the second directions. Therefore, the supporting mechanism can support the vibrator without limiting or inhibiting the vibration of the vibrator along the at least one of the first and the second directions while maintaining the reliability such as a shock proof property by using the elastic mechanism having the relatively high characteristic resonance frequency in the at least one of the first and the second directions.

## Claims

1. A vibrator unit comprising a vibrator supporting mechanism for supporting a vibrator (10; 20; 30) via a support section (14; 24, 34) thereof on a substrate (17), the vibrator comprising a drive section (11A, 11 B; 21A, 21 B; 31A, 31 B) and a detection section (12; 22; 32), wherein the drive section, as it vibrates along a first direction in accordance with applied rotation around an axis that defines a second direction perpendicular to the first direction, is subjected to a Coriolis force in a third direction perpendicular to the first and the second directions, and the detection section vibrates along the first direction in accordance with the Coriolis force effecting the drive section for detecting the strength of the Coriolis force, wherein:
the drive section (11A, 11B; 21A, 21B; 31A, 31B) comprises a first and a second drive arms shaped like rods disposed parallel to the third direction and parallel to each other;
the detection section (12; 22; 32) comprises a detection arm shaped like a rod disposed between and parallel to the first and the second drive arms;
the vibrator further comprises an arm supporting section (13; 23; 33) shaped like a rod parallel to the first direction, wherein one end of the arm supporting section is connected to the center of the first drive arm (11 A; 21 A; 31 A), the other end thereof is connected to the center of the second drive arm (11 B; 21 B, 31 B), and the center thereof is connected to the center of the detection arm (12; 22; 32); and
the vibrator supporting mechanism (15A, 15B, 16A, 16B; 25A, 25B, 26A, 26B; 35A, 35B, 36A, 36B) comprises a first elastic mechanism for supporting the supporting section along the third direction to support the arm supporting section and the detection arm section at the center thereof at which the arm supporting section and the detection arm section are connected to each other.

2. The vibrator unit according to claim 1 further comprising a second elastic mechanism for supporting the supporting section along the first direction.

3. The vibrator unit according to claim 2, wherein the second elastic mechanism has a characteristic resonance frequency of vibration along the first direction that is lower than a characteristic resonance frequency of vibration of the first elastic mechanism along the third direction.

4. The vibrator unit according to claim 2 or 3, wherein the first and the second elastic mechanism are formed by a respective plate or band like member, the width of the member forming the second elastic mechanism (25A, 25B) being narrower than that of the member forming the first elastic mechanism (26A, 26B).

5. The vibrator unit according to claim 2 or 3, wherein the first and the second elastic mechanism are formed by a respective plate or band like member, the members having a section of a certain width, the widths of the member forming the first elastic mechanism (26A, 26B) being different from that of the member forming the second elastic mechanism (25A, 25B).

6. The vibrator unit according to claim 2 or 3, wherein the first and the second elastic mechanism are formed by a respective plate or band like member, at least one of the members (50; 60; 70) being uneven in width.

7. The vibrator unit according to claim 2 or 3, wherein the first and the second elastic mechanism are formed by a respective plate or band like member, at least one of the members (50) having a section that is narrower than the rest of the member.

8. The vibrator unit according to claim 2 or 3, wherein the first and the second elastic mechanism are formed by a respective plate or band like member, at least one of the members (60) having a hollow section (61).

9. The vibrator unit according to claim 2 or 3, wherein the first and the second elastic mechanism are formed by a respective plate or band like member, at least one of the members (75A, 75B; 85A, 858, 86A, 86B) having a bent section.

10. The vibrator unit according to claim 2, wherein the first and the second elastic mechanism are formed by a respective plate or band like member, at least one of the members a material of the member forming the first elastic mechanism (16A, 16B) and a material of the member forming the second elastic mechanism (15A, 15B) have a relationship that the characteristic resonance frequency of the second elastic mechanism is lower than the characteristic resonance frequency of the first elastic mechanism.
